# EUROPÄISCHE PATENTSCHRIFT

(11) **EP 2 730 156 B1**
(45) Veröffentlichungstag und Bekanntmachung des Hinweises auf die Patenterteilung: **01.07.2015**
(21) Anmeldenummer: 13005327.5
(22) Anmeldetag: 12.11.2013
(51) Int. Cl.: A01B 33/04

(54) **Landwirtschaftliche Fräse zur Bearbeitung eines Dammes**
Agricultural grubber for tilling an embankment
Fraise agricole pour le traitement d'un remblai

(30) Priorität: 13.11.2012 DE 202012010819 U
(43) Veröffentlichungstag der Anmeldung: 14.05.2014
(73) Patentinhaber: Hermeler, Thomas, 48336 Sassenberg-Füchtorf (DE)
(72) Erfinder: Hermeler, Thomas, 48336 Sassenberg-Füchtorf (DE)
(74) Vertreter: Witzany, Manfred

(56) Entgegenhaltungen:
- DE-U1-202006 016 743
- US-A- 3 750 758
- US-A- 3 800 880

## Beschreibung

Die Erfindung betrifft eine landwirtschaftliche Fräse zur Bearbeitung eines Dammes, insbesondere eines Spargeldammes gemäß dem Oberbegriff des Patentanspruchs 1.

Aus der DE 20 2006 016 743 U1 ist eine landwirtschaftliche Fräse, insbesondere Spargeldammfräse bekannt. Diese Fräse weist zwei gegenläufig zur Drehung angetriebene Fräser auf, die Bodenmaterial aus den Fahrwegen zwischen den Dämmen zum Damm hin anhäufen. Diese Fräser sind in einem gemeinsamen Gehäuse untergebracht, welches unterseitig und dammseitig offen ist. Im Übrigen ist dieses Gehäuse geschlossen. Dieses Gehäuse dient als Berührschutz für die rotierenden Fräser und gleichzeitig als Führung für das transportierte Bodenmaterial. Diese Fräse hat sich in der Praxis bewährt und bildet den Ausgangspunkt der vorliegenden Erfindung.

Aus der US 3,800,880 A ist eine weitere landwirtschaftliche Fräse bekannt. Diese weist zwei rotierende Fräser auf, die in einem gemeinsamen Gehäuse vorgesehen sind. An diesem Gehäuse ist innenseitig ein Schaber vorgesehen, der zum Abreinigen der Gehäuseinnenwand dient.

Der Erfindung liegt die Aufgabe zugrunde, eine landwirtschaftliche Fräse der eingangs genannten Art zu schaffen, die sich durch eine dauerhaft hohe Bearbeitungsleistung auszeichnet.

Diese Aufgabe wird erfindungsgemäß mit den Merkmalen des Patentanspruchs 1 gelöst.

Eine landwirtschaftliche Fräse gemäß Anspruch 1 dient zur Bearbeitung eines Dammes, insbesondere eines Spargeldammes. Diese Fräse weist mindestens einen rotierenden Fräser auf, der Bodenmaterial zum Damm anhäufen kann. Der mindestens eine Fräser ist in mindestens einem Gehäuse vorgesehen, welches wenigstens unterseitig und dammseitig mindestens im Teilbereich offen ist. An der dem Damm abgewandten Seite weist das mindestens eine Gehäuse mindestens eine Gehäusewand auf, welche vom mindestens einen Fräser beabstandet ist. Dieses Gehäuse stellt einerseits einen Berührschutz für den mindestens einen Fräser dar, dient aber andererseits auch als Führung für das transportierte Bodenmaterial, um es zum Damm anzuhäufen. Die mindestens eine Gehäusewand stellt dabei sicher, dass das Bodenmaterial den Einflussbereich des Fräsers erst im Bereich oberhalb des Dammes verlassen kann, wodurch eine effiziente Dammanhäufung gewährleistet ist.

Es stellte sich heraus, dass diese Konstruktion nachteilig ist. Insbesondere bei feuchtem Bodenmaterial setzt sich die mindestens eine Gehäusewand zunehmend mit Bodenmaterial voll, so dass sich der Freiraum zwischen dem Fräser und der mindestens einen Gehäusewand verkleinert. Auf diese Weise wird der mindestens eine Fräser gebremst, so dass ein zusätzliches Antriebsmoment aufgebracht werden müsste. Dieses zusätzliche Antriebsmoment steht in der Regel jedoch nicht zur Verfügung, da der mindestens eine Fräser üblicherweise von einem Zapfwellenanschluss eines Schleppers angetrieben wird, dessen Drehmoment limitiert ist. Damit führt die Bremswirkung auf den mindestens einen Fräser zu einer Reduktion der Drehzahl des mindestens einen Fräsers und in der Folge zu einer Verringerung der Fliehkräfte auf das mittransportierte Bodenmaterial. Dies reduziert die Transportleistung des mindestens einen Fräsers und damit die Geschwindigkeit der Dammanhäufung beträchtlich. Zur Lösung dieses Problems scheint es zweckmäßig zu sein, die mindestens eine Gehäusewand weiter vom mindestens einen Fräser zu beabstanden. Es hat sich jedoch herausgestellt, dass sich hierdurch die Transportleistung des Bodenmaterials durch den mindestens einen Fräsers reduziert, da das transportierte Bodenmaterial nun vermehrt im vergrößerten Spalt zwischen dem mindestens einen Fräser und der mindestens einen Gehäusewand verloren geht. Außerdem stört dieser Rückfluss den Transport des Bodenmaterials durch den mindestens einen Fräser. Zur Lösung der gestellten Aufgabe ist an der mindestens einen Gehäusewand innenseitig mindestens ein Schaber vorgesehen, welcher entlang der mindestens einen Gehäusewand verstellbar ist. Auf diese Weise wird an der mindestens einen Gehäusewand haftendes Bodenmaterial wenigstens teilweise abgeschabt. Dieser Abschabvorgang erzeugt den erforderlichen Freiraum für den mindestens einen Fräser, so dass dieser nicht mehr vom anhaftenden Bodenmaterial gebremst wird. Das Abschaben des anhaftenden Bodenmaterials führt außerdem zu einer Reduktion des Verschleißes der Bearbeitungswerkzeuge des mindestens einen Fräsers. Die Bearbeitungswerkzeuge weisen daher eine entsprechend vergrößerte Standzeit auf, was Reparatur- und Instandhaltungskosten entsprechend reduziert. Das Abschaben des anhaftenden Bodenmaterials wird vorzugsweise bei rotierendem mindestens einem Fräser durchgeführt, um die Bearbeitungsleistung nicht durch den Abschabvorgang zu reduzieren. Hierzu muss lediglich sichergestellt sein, dass der mindestens eine Schaber entlang seiner gesamten Bewegungsbahn vom mindestens einen Fräser beabstandet ist. In diesem Fall führt die Fräse in beispielsweise periodischen Abständen eine Selbstreinigung der mindestens einen Gehäusewand durch, um die Leistung zu erhalten. Um den mindestens einen Schaber einfach verstellen zu können, durchdringt er mindestens eine Öffnung des mindestens einen Gehäuses. Damit kann der mindestens eine Schaber einfach verstellt werden, ohne in das Gehäuseinnere greifen zu müssen. Der mindestens eine Schaber ist am mindestens einen Gehäuse geführt. Vorzugsweise ist der mindestens eine Schaber an der mindestens einen Gehäusewand des mindestens einen Gehäuses geführt, wodurch sich leicht ein gleich bleibender Abstand des mindestens einen Schabers von der mindestens einen Gehäusewand einstellen lässt. Dies garantiert eine optimale Abschabwirkung des Bodenmaterials von der mindestens einen Gehäusewand. Um den mindestens einen Schaber möglichst reibungsarm zu führen, ist am mindestens einen Schaber mindestens eine Rolle und/oder mindestens ein Rad zur Abwälzung am mindestens einen Gehäuse vorgesehen, welches vorzugsweise außerhalb des mindestens einen Gehäuses liegt.

Gemäß Anspruch 2 ist es vorteilhaft, wenn der mindestens eine Schaber mindestens einen Abstreifer aufweist, dessen Länge mindestens der Breite des mindestens einen Fräsers entspricht. Damit ist sichergestellt, dass dieser Abstreifer jenen Raum frei räumt, der von mindestens einem Fräser benötigt wird. Vorzugsweise ist der mindestens eine Abstreifer so lange ausgebildet, dass er nur geringfügig kürzer als das mindestens eine Gehäuse ist. Auf diese Weise wird eine optimale Reinigung des mindestens einen Gehäuses erzielt.

Zur Erzielung eines effektiven Transports des Bodenmaterials durch den mindestens einen Fräser ist es zweckmäßig, wenn die mindestens eine Gehäusewand vom mindestens einen Fräser einen annähernd konstanten Abstand aufweist. Da der mindestens eine Fräser im Betrieb rotiert, ist es folglich zweckmäßig, die mindestens eine Gehäusewand gekrümmt auszubilden, vorzugsweise ist die mindestens eine Gehäusewand wenigstens im Teilbereich zylindrisch und/oder kegelartig gekrümmt. Um auch eine derartige Gehäusewand effektiv von festsitzendem Bodenmaterial zu reinigen, ist es gemäß Anspruch 3 vorteilhaft, wenn der mindestens eine Schaber entlang einer gekrümmten Bewegungsbahn verstellbar ist. Vorzugsweise ist diese gekrümmte Bewegungsbahn eine Parallelkurve zur mindestens einen Gehäusewand.

Zur optimalen Anpassung an den mindestens einen rotierenden Fräser ist die Bewegungsbahn des mindestens einen Schabers gemäß Anspruch 4 kreisförmig.

Vorzugsweise ist die mindestens eine Öffnung gemäß Anspruch 5 in der mindestens einen Gehäusewand vorgesehen. Dies gewährleistet eine besonders kurze Anbindung des mindestens einen Schabers an eine Verstelleinheit.

Gemäß Anspruch 6 ist es günstig, wenn mindestens zwei der Öffnungen vorgesehen sind, welche parallel zueinander verlaufen. Dies erlaubt eine saubere Zentrierung des mindestens einen Schabers zur mindestens einen Gehäusewand.

Durchdringt der mindestens eine Schaber gemäß Anspruch 7 die mindestens zwei Öffnungen, so wird er besonders stabil relativ zur mindestens einen Gehäusewand gehalten, was eine gleich bleibend hohe Abschabqualität zur Folge hat.

Um die mindestens eine Gehäusewand auch im Fräsbetrieb abschaben zu können, ist es gemäß Anspruch 8 günstig, wenn der mindestens eine Schaber von Stellmitteln verstellbar ist. Diese greifen außenseitig zum mindestens einen Gehäuse am mindestens einen Schaber an, um eine Ablagerung von Bodenmaterial an den Stellmitteln zu verhindern.

Als Stellmittel haben sich gemäß Anspruch 9 Elektromotoren, Hydraulikmotoren und/oder Pneumatikmotoren bewährt. Diese Stellmittel gewährleisten bei geringem baulichem Aufwand eine hohe Stellkraft, um anhaftendes Bodenmaterial zuverlässig abzuschaben.

Die Stellmittel sind gemäß Anspruch 10 vorzugsweise linear verstellbar, was einen besonders einfachen Aufbau der Stellmittel in Form eines Zylinders mit innen laufendem Kolben ermöglicht.

Schließlich ist es gemäß Anspruch 11 vorteilhaft, wenn mindestens zwei der Fräser vorgesehen sind, denen jeweils mindestens ein Schaber zugeordnet ist. An jedem dieser Schaber greift jeweils mindestens ein Stellmittel einseitig an, deren Gegenendengelenk miteinander verbunden ist. Auf diese Weise ergibt sich ein besonders einfacher Aufbau der Fräse, wobei eine lineare Verstellung der Stellmittel problemlos in die gewünschte Bewegung der Schaber entlang einer gekrümmten Bewegungsbahn umgesetzt wird. Vorzugsweise rotieren die Fräser gegenläufig.

Der Erfindungsgegenstand wird beispielhaft anhand der Zeichnung erläutert, ohne den Schutzumfang zu beschränken.

Es zeigt:
- Figur 1: eine räumliche Explosionsdarstellung einer landwirtschaftlichen Fräse und
- Figur 2: eine räumliche Explosionsdarstellung eines Schabers.

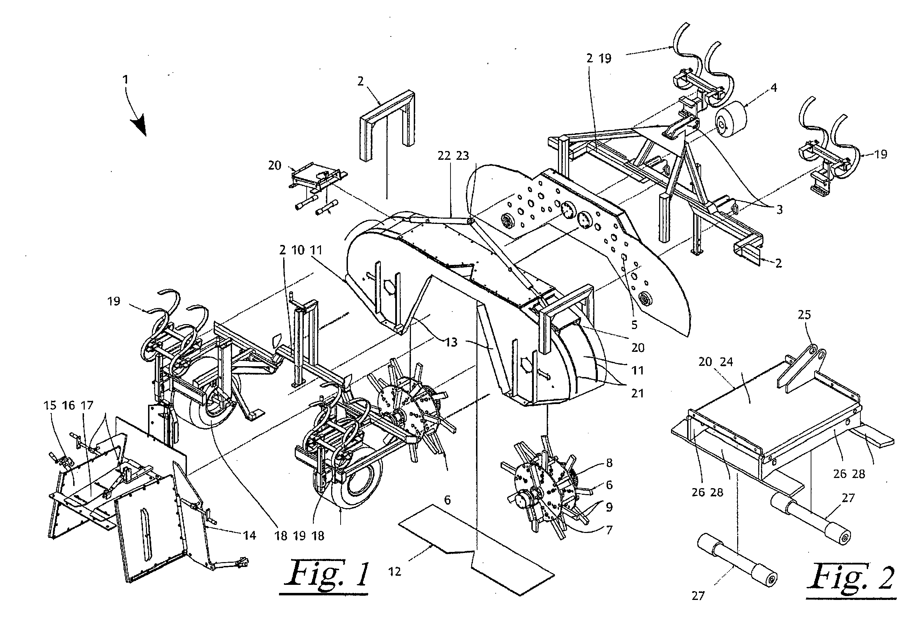

Die Figur 1 zeigt eine räumliche Explosionsdarstellung einer Fräse 1 für landwirtschaftliche Zwecke, nämlich zum Bearbeiten eines nicht dargestellten Dammes. Die Fräse 1 weist einen Rahmen 2 auf, der lediglich zur besseren Übersicht mehrteilig dargestellt ist. Der Rahmen 2 weist frontseitig Verbindungsglieder 3 zur Verbindung mit einer Drei-Punkt-Aufhängung eines Schleppers auf, der die Fräse zieht und über eine nicht dargestellte Zapfwelle antreibt. Diese Zapfwelle wird in einen Zapfwellentrichter 4 gesteckt und treibt nicht dargestellte Zahnräder an, die an Achsen 5 abgestützt sind. Diese nicht dargestellten Zahnräder verbinden zwei Fräser 6 mit der nicht dargestellten Zapfwelle drehmomentübertragend.

Die Fräser 6 sind an jeweils einer Antriebswelle 7 drehbar abgestützt, die mit jeweils einem Zahnrad 8 drehfest verbunden ist. Die beiden Fräser 6 sind grundsätzlich baugleich ausgebildet. Sie weisen im Wesentlichen radial ausgerichtete Bearbeitungswerkzeuge 9 auf, die bei der Rotation des Fräsers 6 nicht dargestelltes Bodenmaterial mitnehmen und in Rotation versetzen. Die beiden Fräser 6 sind dabei gegenläufig zueinander angetrieben, wobei der zu bildende Damm zwischen den beiden Fräsern 6 entsteht.

Die Fräser 6 sind in einem gemeinsamen Gehäuse 10 untergebracht, welches unterseitig und dammseitig offen ausgebildet ist. Alle übrigen Seiten des Gehäuses 10 sind geschlossen. Dieses Gehäuse 10 weist außenseitige, dem Damm abgewandte Gehäusewände 11 auf, welche nur geringfügig von den Bearbeitungswerkzeugen 9 der Fräser 6 beabstandet sind. Diese Gehäusewände 11 sind im Wesentlichen zylindrisch gekrümmt, um eine gute Anpassung an die rotierenden Fräser 6 zu gewährleisten. Das von den Bearbeitungswerkzeugen 9 der Fräser 6 mitgenommene Bodenmaterial wird entlang der Gehäusewand 11 geführt und Richtung Damm transportiert. Im mittleren Bereich weist das Gehäuse 10 eine Prallplatte 12 auf, welche die im Bodenmaterial von den Fräsern 6 eingebrachte kinetische Energie vernichtet, so dass das Bodenmaterial im mittleren Bereich schwerkraftbedingt nach unten fällt. Damit häuft sich in diesem mittleren Bereich der zu bildende Damm an. Zur groben Festlegung des Dammquerschnitts weist das Gehäuse 10 außerdem Dammvorformer 13 auf, die den zu bildenden Damm zu einem trapezförmigen Querschnitt formen.

Dem Gehäuse 10 ist heckseitig ein Dammformer 14 nachgeordnet, der von zwei seitlichen Formplatten 15 und einer oberen Formplatte 16 gebildet ist. Sowohl die seitlichen Formplatten 15 als auch die obere Formplatte 16 sind schwenkbar gelagert und über entsprechende Einstellmittel 17 in ihrer Winkellage einstellbar und fixierbar.

Im Heckbereich ist der Rahmen 2 an zwei Rädern 18 abgestützt, um einerseits die Drei-Punkt-Aufhängung des Schleppers zu entlasten und andererseits zu erreichen, dass die Fräse 1 möglichst genau dem vorhandenen Bodenprofil folgt. Sowohl frontseitig als auch heckseitig sind am Rahmen 2 Bodenlockerer 19 verschwenkbar gehalten.

Zur Leistungsverbesserung der Fräse 1 ist beiden Fräsern 6 jeweils ein Schaber 20 zugeordnet. Zu diesem Zweck sind die zylindrisch gekrümmten Gehäusewände 11 mit zwei parallel verlaufenden schlitzförmigen Öffnungen 21 versehen, die von den Schabern 20 durchdrungen sind. Auf diese Weise dienen die Gehäusewände 11 als Führung für die Schaber 20. An den Schabern 20 greifen außenseitig zum Gehäuse 10 Stellmittel 22 in Form von Hydraulikzylindern an. Diese sind endseitig miteinander gelenkig verbunden. Auf diese Weise wird erreicht, dass der Anlenkungspunkt 23 in der Höhe variieren kann. Dieser Mechanismus bewirkt eine selbsttätige Anpassung der linearen Stellmittel 22 an die gekrümmte Bewegungsbahn der Schaber 20.

Die beiden konstruktiv spiegelbildlich ausgebildeten Schaber 20 haben die Aufgabe, Bodenmaterial, welches an den Gehäusewänden 11 haftet, abzuschaben, um eine hohe Betriebsleistung der Fräse 1 dauerhaft sicherzustellen. Der Schaber 20 ist dabei derart ausgebildet, dass er von den Bearbeitungswerkzeugen 9 der Fräser 6 stets beabstandet ist, so dass Kollisionen mit diesen Bearbeitungswerkzeugen 9 zuverlässig verhindert sind.

Die weitere Beschreibung des Schabers 20 erfolgt anhand der Detaildarstellung gemäß Figur 2. Der Schaber 20 weist einen Rahmen 24 auf, der lediglich beispielhaft als Platte dargestellt ist. Daneben sind auch beliebige andere Konstruktionen möglich. Am Rahmen 24 ist eine Anlenkung 25 vorgesehen, an der das Stellmittel 22 gelenkig angreift.

Unterseitig sind am Rahmen 24 zwei parallele Stege 26 vorgesehen, die die schlitzförmigen Öffnungen 21 der Gehäusewand 11 durchdringen. Der untere Bereich der Stege 26 befindet sich daher im Innenraum des Gehäuses 10. Im oberen Bereich sind an den Stegen 26 Rollen 27 drehbar abgestützt. Diese Rollen befinden sich außerhalb des Gehäuses 10, um ein Festsetzen von Bodenmaterial an den Rollen 27 zu verhindern.

Im unteren Bereich der Stege 26 sind zwei Abstreifer 28 vorgesehen. Diese befinden sich im Innenraum des Gehäuses 10 und sind so ausgebildet, dass sie nur in den Spaltraum zwischen dem Fräser 6 und der Gehäusewand 11 greifen können. Die Abstreifer 28 sind dabei mindestens so lange wie die Breite der Fräser 6 ausgebildet. Vorzugsweise sind die Abstreifer 28 nur geringfügig kleiner als die lichte Breite des Gehäuses 10 dimensioniert. Auf diese Weise wird eine optimale Abstreifwirkung für das anhaftende Bodenmaterial erzielt. Die Abstreifer 28 sind winkelig zueinander angestellt, um dem gekrümmten Spaltraum zwischen dem Fräser 6 und der Gehäusewand 11 Rechnung zu tragen.

### Bezugszeichenliste

- 1: Fräse
- 2: Rahmen
- 3: Verbindungsglied
- 4: Zapfwellentrichter
- 5: Achse
- 6: Fräser
- 7: Antriebswelle
- 8: Zahnrad
- 9: Bearbeitungswerkzeug
- 10: Gehäuse
- 11: Gehäusewand
- 12: Prallplatte
- 13: Dammvorformer
- 14: Dammformer
- 15: seitliche Formplatte
- 16: obere Formplatte
- 17: Einstellmittel
- 18: Rad
- 19: Bodenlockerer
- 20: Schaber
- 21: Öffnung
- 22: Stellmittel
- 23: Anlenkungspunkt
- 24: Rahmen
- 25: Anlenkung
- 26: Steg
- 27: Rolle
- 28: Abstreifer

## Patentansprüche

1. Landwirtschaftliche Fräse zur Bearbeitung eines Dammes, insbesondere eines Spargeldammes, wobei die Fräse (1) mindestens einen rotierenden Fräser (6) aufweist, der Bodenmaterial zum Damm anhäufen kann, wobei der mindestens eine Fräser (6) in mindestens einem Gehäuse (10) vorgesehen ist, welches wenigstes unterseitig und dammseitig zumindest im Teilbereich offen ist, wobei das mindestens eine Gehäuse (10) an mindestens einer dem Damm abgewandten Seite mindestens eine Gehäusewand (11) aufweist, welche vom mindestens einen Fräser (6) beabstandet ist, **dadurch gekennzeichnet, dass** an der mindestens einen Gehäusewand (11) innenseitig mindestens ein Schaber (20) vorgesehen ist, welcher entlang der mindestens einen Gehäusewand (11) verstellbar ist, um an der mindestens einen Gehäusewand (11) haftendes Bodenmaterial wenigstens teilweise abzuschaben, wobei der mindestens eine Schaber (20) mindestens eine Öffnung (21) des Gehäuses durchdringt, an dem mindestens einen Gehäuse (10) geführt ist und mindestens eine Rolle (27) und/oder mindestens ein Rad zur Abwälzung am mindestens einen Gehäuse (10) aufweist.

2. Landwirtschaftliche Fräse nach Anspruch 1, **dadurch gekennzeichnet, dass** der mindestens eine Schaber (20) mindestens einen Abstreifer (28) aufweist, der eine Länge aufweist, die mindestens der Breite des mindestens einen Fräsers (6) entspricht.

3. Landwirtschaftliche Fräse nach Anspruch 1 oder 2, **dadurch gekennzeichnet, dass** die mindestens eine Gehäusewand (11) gekrümmt ausgebildet ist und der mindestens eine Schaber (20) entlang einer gekrümmten Bewegungsbahn verstellbar ist.

4. Landwirtschaftliche Fräse nach Anspruch 3, **dadurch gekennzeichnet, dass** die Bewegungsbahn kreisförmig ist.

5. Landwirtschaftliche Fräse nach mindestens einem der Ansprüche 1 bis 4, **dadurch gekennzeichnet, dass** die mindestens eine Öffnung (21) in der mindestens einen Gehäusewand (11) vorgesehen ist.

6. Landwirtschaftliche Fräse nach mindestens einem der Ansprüche 1 bis 5, **dadurch gekennzeichnet, dass** mindestens zwei der Öffnungen (21) vorgesehen sind, welche schlitzförmig ausgebildet sind und parallel zueinander verlaufen.

7. Landwirtschaftliche Fräse nach Anspruch 6, **dadurch gekennzeichnet, dass** der mindestens eine Schaber (20) die mindestens zwei Öffnungen (21) durchdringt.

8. Landwirtschaftliche Fräse nach mindestens einem der Ansprüche 1 bis 7, **dadurch gekennzeichnet, dass** der mindestens eine Schaber (20) von Stellmitteln (22) verstellbar ist, welche außenseitig zum mindestens einen Gehäuse (10) vorgesehen sind.

9. Landwirtschaftliche Fräse nach Anspruch 8, **dadurch gekennzeichnet, dass** die Stellmittel (22) von mindestens einem Elektromotor, Hydraulikmotor oder Pneumatikmotor gebildet sind.

10. Landwirtschaftliche Fräse nach Anspruch 8 oder 9, **dadurch gekennzeichnet, dass** die Stellmittel linear verstellbar sind.

11. Landwirtschaftliche Fräse nach Anspruch 10, wobei mindestens zwei der Fräser (6) vorgesehen sind, **dadurch gekennzeichnet, dass** mindestens zwei der Schaber (20) vorgesehen sind, an denen die Stellmittel (22) einseitig angreifen, welche miteinander gelenkig verbunden sind.

## Claims

1. Agricultural cutter for working a dam, in particular an asparagus dam, wherein the cutter (1) has at least one rotating cutter unit (6) which can accumulate soil material to form the dam, wherein the at least one cutter unit (6) is provided in at least one housing (10) which is open at least in the subregion at least on the underside and on the dam side, wherein the at least one housing (10) has at least one housing wall (11) on at least one side facing away from the dam, which housing wall is spaced apart from the at least one cutter unit (6), **characterized in that** at least one scraper (20) is provided on the inner side of the at least one housing wall (11) and is adjustable along the at least one housing wall (11) in order to at least partially scrape off soil material adhering to the at least one housing wall (11), wherein the at least one scraper (20) passes through at least one opening (21) of the housing, is guided on the at least one housing (10) and has at least one roller (27) and/or at least one wheel for rolling on the at least one housing (10).

2. Agricultural cutter according to Claim 1, **characterized in that** the at least one scraper (20) has at least one stripper (28) which has a length which corresponds at least to the width of the at least one cutter unit (6).

3. Agricultural cutter according to Claim 1 or 2, **characterized in that** the at least one housing wall (11) is of curved design and the at least one scraper (20) is adjustable along a curved movement path.

4. Agricultural cutter according to Claim 3, **characterized in that** the movement path is circular.

5. Agricultural cutter according to at least one of Claims 1 to 4, **characterized in that** the at least one opening (21) is provided in the at least one housing wall (11).

6. Agricultural cutter according to at least one of Claims 1 to 5, **characterized in that** at least two of the openings (21) are provided and have a slot-shaped design and run parallel to one another.

7. Agricultural cutter according to Claim 6, **characterized in that** the at least one scraper (20) passes through the at least two openings (21).

8. Agricultural cutter according to at least one of Claims 1 to 7, **characterized in that** the at least one scraper (20) is adjustable by actuating means (22) which are provided on the outer side with respect to the at least one housing (10).

9. Agricultural cutter according to Claim 8, **characterized in that** the actuating means (22) are formed by at least one electric motor, hydraulic motor or pneumatic motor.

10. Agricultural cutter according to Claim 8 or 9, **characterized in that** the actuating means are linearly adjustable.

11. Agricultural cutter according to Claim 10, wherein at least two of the cutter units (6) are provided, **characterized in that** at least two of the scrapers (20) are provided on which the actuating means (22) act on one side and are connected to one another in an articulated manner.

## Revendications

1. Fraise agricole pour le travail d'une butte, en particulier d'une butte d'asperges, la fraise (1) comprenant au moins un outil de fraisage rotatif (6) qui peut amasser du matériau de sol pour former la butte, l'au moins un outil de fraisage (6) étant prévu dans au moins un boîtier (10) qui est ouvert au moins dans la région partielle au moins du côté inférieur et du côté de la butte, l'au moins un boîtier (10) comprenant au moins une paroi de boîtier (11) sur au moins un côté opposé à la butte, laquelle paroi de boîtier est espacée de l'au moins un outil de fraisage (6), **caractérisée en ce qu'**au moins un grattoir (20) est prévu du côté intérieur sur l'au moins une paroi de boîtier (11), lequel grattoir est réglable le long de l'au moins une paroi de boîtier (11), afin de gratter au moins partiellement du matériau de sol adhérant à l'au moins une paroi de boîtier (11), l'au moins un grattoir (20) traversant au moins une ouverture (21) du boîtier, étant guidé sur l'au moins un boîtier (10) et comprenant au moins un rouleau (27) et/ou au moins une roue pour rouler sur l'au moins un boîtier (10).

2. Fraise agricole selon la revendication 1, **caractérisée en ce que** l'au moins un grattoir (20) comprend au moins un racleur (28) qui présente une longueur qui correspond au moins à la largeur de l'au moins un outil de fraisage (6).

3. Fraise agricole selon la revendication 1 ou 2, **caractérisée en ce que** l'au moins une paroi de boîtier (11) est réalisée de manière courbée et l'au moins un grattoir (20) est réglable le long d'une voie de déplacement courbée.

4. Fraise agricole selon la revendication 3, **caractérisée en ce que** la voie de déplacement est circulaire.

5. Fraise agricole selon au moins l'une quelconque des revendications 1 à 4, **caractérisée en ce que** l'au moins une ouverture (21) est prévue dans l'au moins une paroi de boîtier (11).

6. Fraise agricole selon au moins l'une quelconque des revendications 1 à 5, **caractérisée en ce qu'**au moins deux des ouvertures (21) sont prévues, lesquelles sont réalisées en forme de fentes et s'étendent parallèlement l'une à l'autre.

7. Fraise agricole selon la revendication 6, **caractérisée en ce que** l'au moins un grattoir (20) traverse les au moins deux ouvertures (21).

8. Fraise agricole selon au moins l'une quelconque des revendications 1 à 7, **caractérisée en ce que** l'au moins un grattoir (20) peut être réglé par des moyens de réglage (22), lesquels sont prévus du côté extérieur par rapport à l'au moins un boîtier (10).

9. Fraise agricole selon la revendication 8, **caractérisée en ce que** les moyens de réglage (22) sont formés par au moins un moteur électrique, au moins un moteur hydraulique ou au moins un moteur pneumatique.

10. Fraise agricole selon la revendication 8 ou 9, **caractérisée en ce que** les moyens de réglage sont réglables linéairement.

11. Fraise agricole selon la revendication 10, dans laquelle au moins deux des outils de fraisage (6) sont prévus, **caractérisée en ce qu'**au moins deux des grattoirs (20) sont prévus, sur lesquels les moyens de réglage (22) viennent en prise d'un côté, lesquels sont reliés de manière articulée l'un à l'autre.
